# FASCICULE DE BREVET EUROPEEN

(11) **EP 3 084 177 B1**
(45) Date de publication et mention de la délivrance du brevet: **07.02.2018**
(21) Numéro de dépôt: 14830817.4
(22) Date de dépôt: 17.12.2014
(51) Int. Cl.: F02C 7/05, F02C 7/25

(54) **CARTER EN MATÉRIAU COMPOSITE À MATRICE ORGANIQUE FAVORISANT L'ÉVACUATION DES FUMÉES.**
GEHÄUSE AUS EINEM ORGANISCHEN MATRIXVERBUNDSTOFF ZUR FÖRDERUNG DES ABZUGS VON DÄMPFEN
HOUSING MADE FROM AN ORGANIC-MATRIX COMPOSITE MATERIAL PROMOTING THE DISCHARGE OF FUMES

(30) Priorité: 20.12.2013 FR 1363213
(43) Date de publication de la demande: 26.10.2016
(73) Titulaire: SNECMA, 75015 Paris (FR)
(72) Inventeur: QUILLENT, Hélène, F-77550 Moissy-Cramayel (FR); LANGEVIN, Thomas, F-77550 Moissy-Cramayel (FR); MOURLAN, Jean-Pierre, André, Joseph, F-77550 Moissy-Cramayel (FR); PAIXAO, Adrien, F-77550 Moissy-Cramayel (FR); SFARTI, François, F-77550 Moissy-Cramayel (FR)
(74) Mandataire: Desormiere, Pierre-Louis
(86) Numéro de dépôt international: PCT/FR2014/053397
(87) Numéro de publication internationale: WO 2015/092280

(56) Documents cités:
- WO-A1-2012/076876
- FR-A1- 2 698 910
- FR-A1- 2 976 974
- GB-A- 2 406 615

## Description

### Arrière-plan de l'invention

L'invention concerne les carters de turbine à gaz, et plus particulièrement, mais non exclusivement, les carters de soufflante de turbine à gaz pour moteurs aéronautiques.

Dans un moteur aéronautique à turbine à gaz, le carter de soufflante remplit plusieurs fonctions. Il définit la veine d'entrée d'air dans le moteur, supporte un matériau abradable en regard des sommets d'aubes de la soufflante, le matériau abradable étant en général lui-même supporté par une structure alvéolaire.

Précédemment réalisés en matériau métallique, les carters, comme le carter de soufflante, sont maintenant réalisés en matériau composite, c'est-à-dire à partir d'une préforme fibreuse densifiée par une matrice organique, ce qui permet de réaliser des pièces ayant une masse globale moins élevée que ces mêmes pièces lorsqu'elles sont réalisées en matériau métallique tout en présentant une résistance mécanique au moins équivalente sinon supérieure. La fabrication d'un carter de soufflante en matériau composite à matrice organique est notamment décrite dans les documents EP 1 961 923 et FR 2 976 974.

Le carter de soufflante est une des pièces qui délimite une zone de feu au sens de la certification aéronautique. A ce titre, il doit être considéré comme une paroi coupe-feu entre le compartiment nacelle situé du côté externe du carter et la veine d'écoulement délimitée à l'intérieur du carter et répondre aux exigences règlementaires associées.

Cependant, lors d'essais de tenue au feu, il a été constaté que l'extinction des flammes présentes du côté externe du carter, c'est-à-dire dans le compartiment nacelle du moteur, pouvait être difficile, et ce même après la coupure du bruleur.

### Objet et résumé de l'invention

Il est donc souhaitable de pouvoir disposer d'une solution assurant une extinction fiable du feu du côté externe du carter.

Des essais de tenue au feu réalisés par la Titulaire sur des éprouvettes en matériau composite à matrice organique ont montré que la résine se dégrade en dégageant des gaz. Ces gaz étant inflammables, ils peuvent conduire à maintenir la flamme même après la coupure du bruleur.

Dans le cas d'un carter de moteur aéronautique, des pièces de structure, telles que des panneaux abradables et/ou acoustiques, sont fixées contre la face interne du carter par collage. Des essais, également réalisés par la Titulaire, ont montré que ces pièces collées contre la face interne du carter empêchent, en cas de feu, l'évacuation des gaz de dégradation de la résine du côté veine et sont, par conséquent, principalement évacués du côté externe du carter, c'est-à-dire dans le compartiment nacelle où le feu est présent. Ces gaz étant inflammables, leur évacuation du côté de la flamme peut conduire au maintien du feu même après coupure du moteur et déclenchement des systèmes d'extinction. Aussi, lorsque l'on est en présence d'une pièce en matériau composite à matrice organique, il est souhaitable d'évacuer de façon préférentielle les gaz issus de la dégradation de la résine en dehors de la zone de flamme.

A cet effet, selon l'invention, il est proposé un carter de turbine à gaz en matériau composite à matrice organique comprenant un renfort densifié par une matrice organique, ledit carter délimitant un volume interne et comprenant sur sa face interne une pièce de structure ayant une première face en regard de la face interne du carter et une deuxième face opposée définissant une partie de veine d'écoulement, caractérisé en ce que la face de la pièce de structure en regard de la face interne du carter comporte des rainures débouchant directement ou indirectement dans le volume interne du carter et en ce que ces rainures s'étendent au moins dans la direction axiale du carter

Ainsi, grâce à la présence de rainures débouchant dans le volume interne du carter, les gaz issus de la dégradation de la matrice du carter lors de la présence de flammes du côté externe du carter peuvent être évacués du côté veine, ce qui évite de perturber l'extinction du feu côté externe du carter.

Des rainures supplémentaires peuvent s'étendre dans une direction perpendiculaire à ces premières rainures axiales. Selon un aspect du carter selon l'invention, les rainures débouchent au moins à une extrémité axiale de la pièce de structure. Selon un autre aspect du carter selon l'invention, les rainures s'arrêtent avant les extrémités axiales de la pièce de structure et communiquent avec des perforations débouchant sur la deuxième face de la pièce de structure.

Selon un autre mode de réalisation du carter de l'invention, la pièce de structure est collée sur la face interne du carter via des plots d'écartement, ce qui permet d'avoir des évidements ou espaces entre la face interne du carter et la pièce de structure et d'évacuer les gaz dégagés lors de la dégradation par le feu de la matrice du carter du côté veine.

Selon encore un autre mode de réalisation du carter selon l'invention, la face interne du carter comporte des rainures débouchant au-delà de la pièce de structure.

Selon un aspect du carter de l'invention, la pièce de structure comprend une structure alvéolaire en regard de la face interne du carter. Dans ce cas, la présence d'évidements entre la pièce de structure et la face interne du carter permet aux gaz dégagés lors de la dégradation de la matrice du carter de traverser la structure alvéolaire pour être évacués du côté veine. La pièce de structure peut comprendre en outre une couche de revêtement abradable supportée par la structure alvéolaire.

Par ailleurs, les rainures peuvent en outre comporter des gouttières, par exemple formées par une texture fibreuse consolidée par une matrice. On assure ainsi l'étanchéité de la structure alvéolaire dans les zones où celle-ci n'est plus en contact avec la paroi du carter.

Selon toujours un autre mode de réalisation du carter de l'invention, la pièce de structure comprend une structure alvéolaire en regard de la face interne du carter, une peau fermant les cellules de la structure alvéolaire du côté de la face de ladite structure opposée à celle en regard avec la face interne du carter, les parois des cellules de la structure alvéolaire comportant au moins une perforation, la peau comportant en outre des perforations débouchant dans le volume interne du carter.

L'invention a également pour objet un moteur aéronautique à turbine à gaz ayant un carter de rétention de soufflante selon l'invention et un aéronef comprenant un ou plusieurs de ces moteurs.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- les figures 1A et 1B sont respectivement une vue en perspective et une vue en coupe d'un carter de soufflante d'un moteur aéronautique selon l'art antérieur,
- la figure 2A est une vue en perspective d'une pièce de structure conformément à un mode de réalisation de l'invention,
- la figure 2B est une vue en coupe d'un carter en matériau composite à matrice organique équipé de la pièce de structure de la figure 2A,
- la figure 3 est une vue en perspective d'une pièce de structure conformément à un mode de réalisation de l'invention,
- la figure 4A est une vue en perspective d'une pièce de structure conformément à un mode de réalisation de l'invention,
- la figure 4B est une vue en coupe d'un carter en matériau composite à matrice organique équipé de la pièce de structure de la figure 4A,
- la figure 5A est une vue en coupe d'un exemple de carter en matériau composite à matrice organique équipé d'une pièce de structure,
- la figure 5B est une vue en perspective de la pièce de structure de la figure 5A,
- la figure 6 est une vue en coupe d'un carter en matériau composite à matrice organique équipé d'une structure conformément à un mode de réalisation de l'invention.

### Description détaillée de modes de réalisation

L'invention s'applique d'une manière générale à tout carter en matériau composite à matrice organique de turbine à gaz et comprenant sur sa face interne au moins une pièce de structure.

L'invention sera décrite ci-après dans le cadre de son application à un carter de soufflante de moteur aéronautique à turbine à gaz.

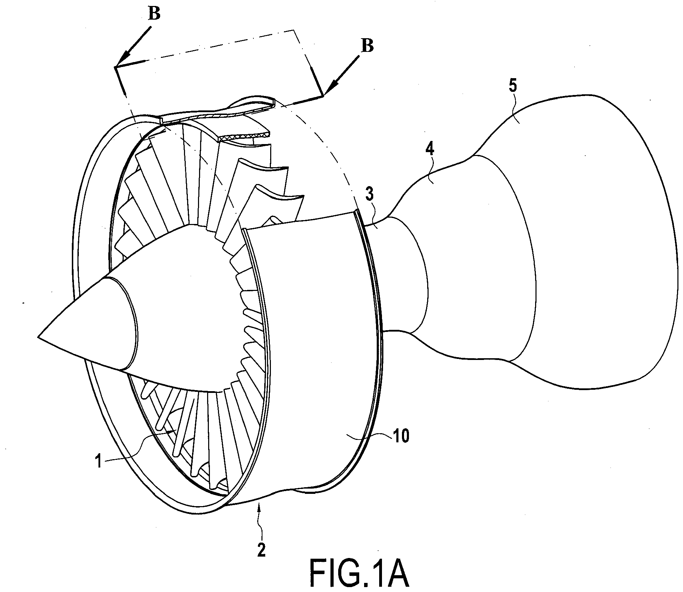

Un tel moteur, comme montré très schématiquement par la figure 1A comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5.

Le moteur est logé à l'intérieur d'un carter comprenant plusieurs parties correspondant à différents éléments du moteur. Ainsi, la soufflante 1 est entourée par un carter de soufflante 10.

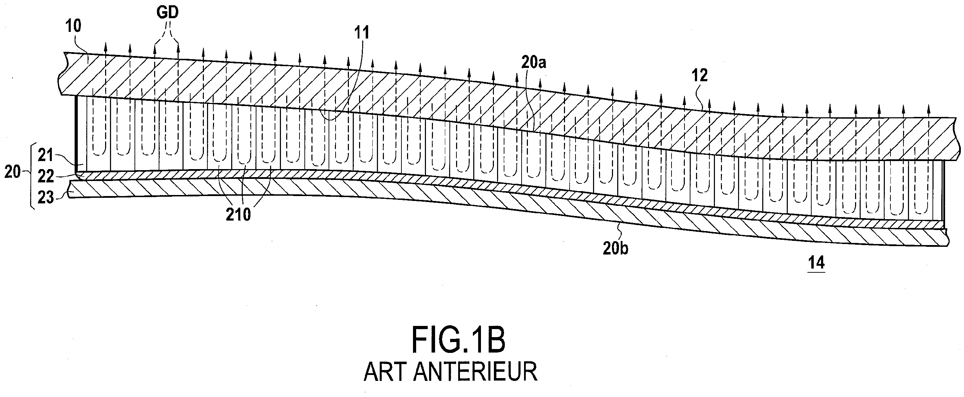

La figure 1B montre le profil du carter de soufflante 10 qui est réalisé en matériau composite à matrice organique, c'est-à-dire à partir d'un renfort en fibres par exemple de carbone, verre, aramide ou céramique, densifié par une matrice en polymère, par exemple époxide, bismaléimide ou polyimide. La fabrication d'un tel carter est notamment décrite dans le document EP 1 961 923.

Dans l'exemple décrit ici, la face interne 11 du carter 10 est munie d'une pièce de structure 20 constituée d'une structure alvéolaire 21 et d'une couche de matériau abradable 23 fixée sur la structure alvéolaire par une peau 22, formée par exemple d'une couche de résine, qui assure également la fermeture de la partie basse des cellules 210 de la structure alvéolaire 21, ces dernières étant fermées dans leur partie haute par la face interne 11 du carter avec laquelle elles sont en contact. La pièce de structure 20 comporte une première face 20a en regard de la face interne 11 du carter 10, la face 20a correspondant ici à la partie haute des cellules 210 de la structure alvéolaire 21. La pièce de structure comporte une deuxième face 20b opposée à la face 20a dont la géométrie définit une portion de la veine d'écoulement 14.

Lors de la présence d'une flamme du côté de la face externe 12 du carter, les gaz de dégradation, dégagés par la résine (flèches GD sur la figure 1B) constitutive de la matrice du carter du côté de la face interne 11 de celui-ci ne peuvent pas traverser la pièce 20 pour atteindre la veine 14 au travers de laquelle ils devraient être évacués. Ces gaz sont donc évacués principalement du côté de la face externe 12 du carter 10, c'est-à-dire du côté de la flamme qui risque alors d'être entretenue par les gaz de dégradation inflammables.

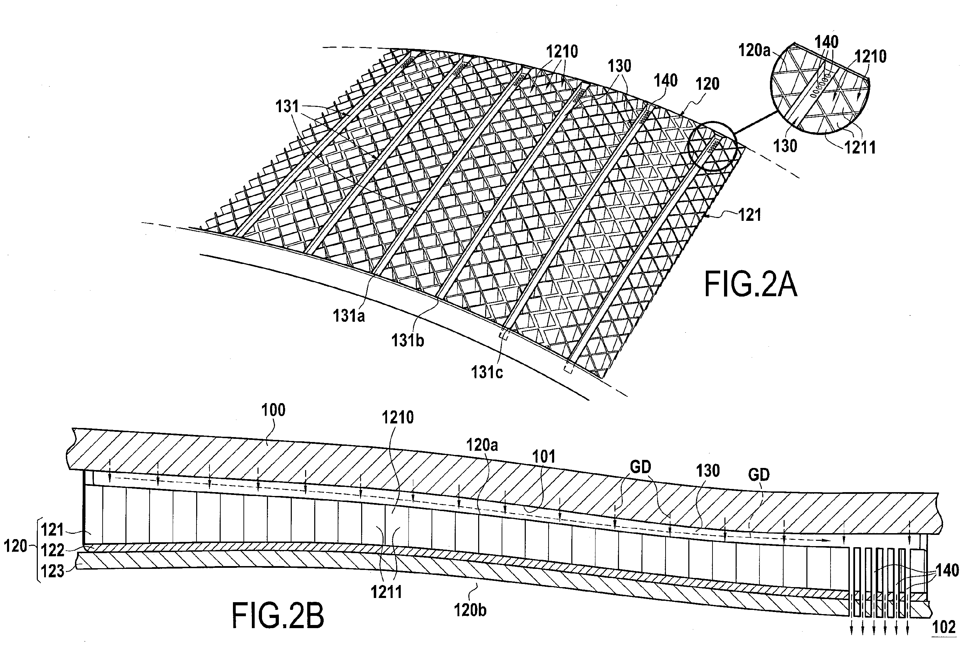

Conformément à un mode de réalisation de l'invention illustré dans les figures 2A et 2B, un carter 100 similaire au carter 10 déjà décrit comprend sur sa face interne 101 une pièce de structure 120 qui diffère de la pièce de structure 20 déjà décrite en ce qu'elle comporte, sur sa première face 120a en regard de la face interne 101 du carter 100, des rainures ou passages 130 ménagés dans les parois 1211 des cellules 1210 de la structure alvéolaire 121, les rainures 130 s'étendant dans une direction parallèle à la direction axiale du carter 100. La deuxième face 120b opposée à la face 120a est constituée de la couche de matériau abradable 123 qui est fixée sur la structure alvéolaire 121 via la peau 122. Cette deuxième face 120b définit une portion de la veine d'écoulement 102. Les rainures 130 permettent au gaz dégagés (flèches GD sur la figure 2B) lors de la dégradation de la matrice organique du matériau du carter de circuler vers la partie aval de la pièce 120 afin d'être évacuées par des perforations 140 comme illustrées sur la figure 2B. Dans l'exemple décrit ici, les performations 140 sont présentes dans la couche de matériau abradable 123 au niveau de l'extrémité aval de la pièce 120 et permettent d'évacuer les gaz circulant dans les rainures 130 dans la veine 102 située dans le volume interne du carter 100.

Dans le mode de réalisation décrit ici, les rainures 130 comportent des gouttières 131 qui sont formées par une texture fibreuse, par exemple en fibres de carbone, consolidée par une matrice, par exemple une matrice époxy. Les gouttières 131 peuvent être réalisées en utilisant une texture fibreuse pré-imprégnée avec une résine précurseur de la matrice qui est mise en forme dans les rainures afin de former une paroi de fond de gouttière 131a à partir de laquelle s'étendent deux parois latérales 131b et 131c. Les gouttières 131 permettent d'assurer l'étanchéité de la structure alvéolaire dans les zones où celle-ci n'est plus en contact avec la paroi du carter et d'éviter ainsi toute introduction d'humidité dans les cellules de la structure alvéolaire.

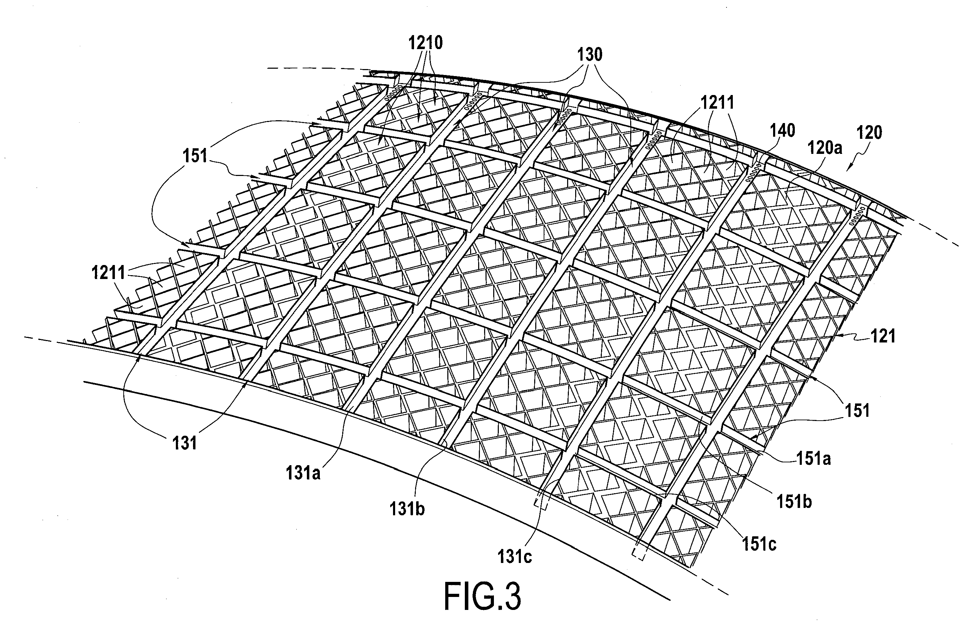

Selon une variante de réalisation illustrée à la figure 3, la pièce de structure 120 comporte en outre sur sa face 120a des rainures supplémentaires 150 qui s'étendent perpendiculairement par rapport aux rainures 130 qui s'étendent dans la direction axiale du carter 100. Les gaz de dégradation issus du carter 100 peuvent ainsi circuler à la fois dans les rainures 130 et 150 et être évacués par les performations 140, c'est-à-dire dans la veine située dans le volume interne du carter 100. Dans le mode de réalisation décrit ici, les rainures 130 et 150 comportent respectivement des gouttières 131 et 151 qui sont formées par une texture fibreuse, par exemple en fibres de carbone, consolidée par une matrice, par exemple une matrice époxy. Les gouttières 131 et 151 peuvent être réalisées en utilisant une texture fibreuse pré-imprégnée avec une résine précurseur de la matrice qui est mise en forme dans les rainures afin de former une paroi de fond de gouttière 131a, respectivement 151a, à partir de laquelle s'étendent deux parois latérales 131b et 131c, respectivement 151b et 151c. Les gouttières 131 et 151 permettent d'assurer l'étanchéité de la structure alvéolaire dans les zones où celle-ci n'est plus en contact avec la paroi du carter et d'éviter ainsi toute introduction d'humidité dans les cellules de la structure alvéolaire.

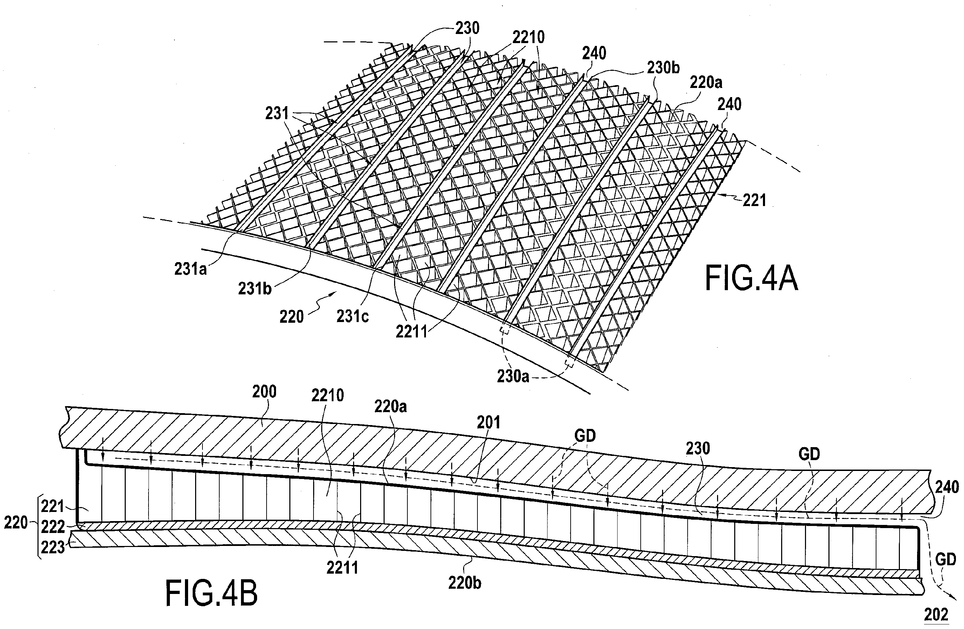

Conformément à un autre mode de réalisation de l'invention illustré dans les figures 4A et 4B, un carter 200 similaire au carter 10 déjà décrit comprend sur sa face interne 201 une pièce de structure 220 qui diffère de la pièce de structure 20 déjà décrite en ce qu'elle comporte, sur sa première face 220a en regard de la face interne 201 du carter 200, des rainures ou passages 230 ménagés dans les parois 2211 des cellules 2210 de la structure alvéolaire 221, les rainures 230 s'étendant dans une direction parallèle à la direction axiale du carter 100. La deuxième face 220b opposée à la face 220a est constituée de la couche de matériau abradable 223 qui est fixée sur la structure alvéolaire 221 via la peau 222. Cette deuxième face 220b définit une portion de la veine d'écoulement 202. Les rainures 230 permettent au gaz dégagés (flèches GD sur la figure 4B) lors de la dégradation de la matrice organique du matériau du carter de circuler vers la partie aval de la pièce 220 afin d'être évacuées par des ouvertures 240 ménagées au niveau de l'extrémité aval 230b des rainures 230, l'extrémité amont 230a des rainures 230 étant fermée. Les gaz de dégradation circulant dans les rainures 230 sont alors évacués dans la veine 202 située dans le volume interne du carter 200. Dans le mode de réalisation décrit ici, les rainures 230 comportent des gouttières 231 qui sont formées par une texture fibreuse, par exemple en fibres de carbone, consolidée par une matrice, par exemple une matrice époxy. Les gouttières 231 peuvent être réalisées en utilisant une texture fibreuse pré-imprégnée avec une résine précurseur de la matrice qui est mise en forme dans les rainures afin de former une paroi de fond de gouttière 231a à partir de laquelle s'étendent deux parois latérales 231b et 231c. Les gouttières 231 permettent d'assurer l'étanchéité de la structure alvéolaire dans les zones où celle-ci n'est plus en contact avec la paroi du carter et d'éviter ainsi toute introduction d'humidité dans les cellules de la structure alvéolaire, en particulier par les ouvertures 240. Selon une variante de réalisation de protection contre l'humidité, les cellules présentes au voisinage des rainures 230 peuvent être densifiées avec un adhésif intumescent ou une résine de densification (« potting »).

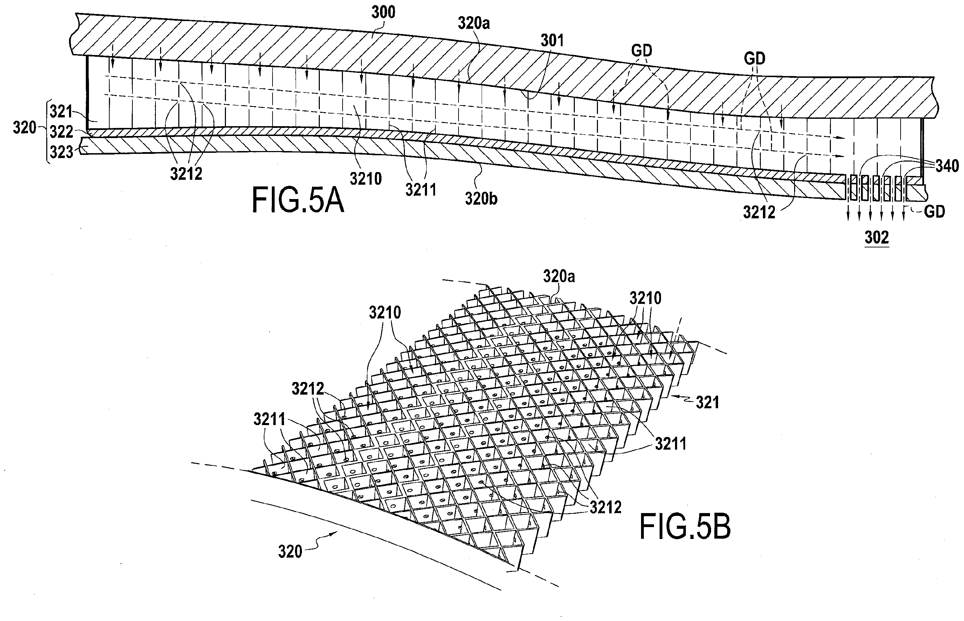

Selon un exemple qui ne fait pas partie de l'invention, illustré dans les figures 5A et 5B, un carter 300 similaire au carter 10 déjà décrit comprend sur sa face interne 301 une pièce de structure 320 qui diffère de la pièce de structure 20 déjà décrite en ce que les parois 3211 des cellules 3210 de la structure alvéolaire 321 comporte chacune une ou plusieurs perforations 3212. La deuxième face 320b opposée à la face 320a et constituée de la couche de matériau abradable 323 définit une portion de la veine d'écoulement 302. Les perforations 3212 permettent au gaz dégagés (flèches GD sur la figure 5A) lors de la dégradation de la matrice organique du matériau du carter et entrant dans les cellules 3210 du côté de la face 320a de la pièce 320 de circuler vers la partie aval de la pièce 320 afin d'être évacués par des perforations 340 comme illustrées sur la figure 5A. Dans l'exemple décrit ici, les performations 340 sont présentes dans la peau 322 et la couche de matériau abradable 323 au niveau de l'extrémité aval de la pièce 320 et permettent l'évacuation des gaz circulant à travers les perforations 3212 ménagées dans les cellules 3210 dans la veine située dans le volume interne du carter 300.

Dans les modes de réalisation décrits ci-dessus en relation avec les figures 2, 3, 4, 5 et 6, les perforations sont réalisées à l'extrémité aval de la pièce de structure. Toutefois, des performations peuvent également être réalisées à d'autres endroits de la pièce de structure.

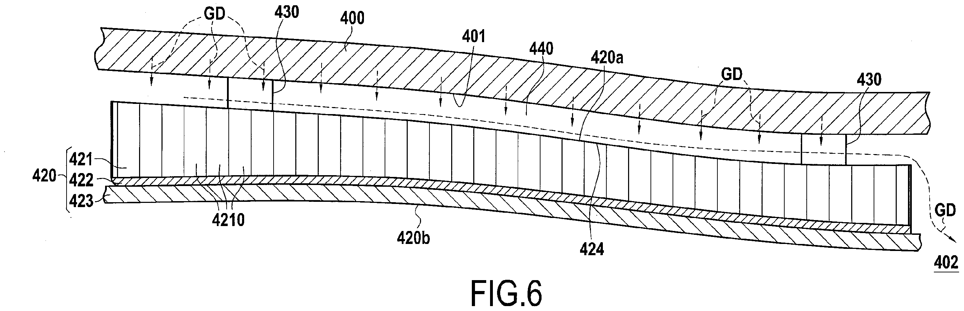

Selon encore un autre mode de réalisation de l'invention illustré en figure 6, un carter 400 comprend du côté de sa face interne 401 une pièce de structure 420 constituée d'une structure alvéolaire 421 et d'une couche de matériau abradable 423 fixée sur la structure alvéolaire par une première peau 422, formée par exemple de plis de carbone, qui assure également la fermeture de la partie basse des cellules 4210 de la structure alvéolaire 421, ces dernières étant fermées dans leur partie haute par une deuxième peau 424, formée par exemple de plis de carbone. La pièce de structure 420 comporte une première face 420a en regard de la face interne 401 du carter 410, la face 420a correspondant ici à la partie haute des cellules de la structure alvéolaire 421. La pièce de structure comporte une deuxième face 420b opposée à la face 420a dont la géométrie définit une portion de la veine d'écoulement 402.

Dans ce mode de réalisation, la pièce de structure 420 est fixée au carter par l'intermédiaire de plots d'écartement 430 qui sont fixés par collage sur la face interne 401 du carter 400, d'une part, et, d'autre part, sur la face 420a de la pièce 420 qui est ici constituée de la deuxième peau 424. Les plots d'écartement 430 sont de préférence ajustables en hauteur afin de contrôler les jeux et l'interaction avec le sommet des aubes de la turbine. Grâce à l'utilisation des plots d'écartement 430, un passage ou évidement 440 est formé entre la face 420a de la pièce 420 et la face interne 401 du carter 400, ce qui permet au gaz dégagés (flèches GD sur la figure 6) lors de la dégradation de la matrice organique du matériau du carter de circuler vers la partie aval de la pièce 420 afin d'être évacués dans la veine 402.

Selon toujours un autre mode de réalisation, la face interne du carter comporte des rainures débouchant au-delà de la pièce de structure. Ce mode réalisation peut être combiné avec les autres modes de réalisation décrits ci-avant.

## Revendications

1. Carter (100 ; 200 ; 300 ; 400) de turbine à gaz en matériau composite à matrice organique comprenant un renfort densifié par une matrice organique, ledit carter délimitant un volume interne et comprenant sur sa face interne (101 ; 201 ; 301 ; 401) une pièce de structure (120 ; 220 ; 320 ; 420) ayant une première face (120a ; 220a ; 320a ; 420a) en regard de la face interne du carter et une deuxième face opposée (120b ; 220b ; 320b ; 420b) définissant une partie de veine d'écoulement (102 ; 202 ; 302 ; 402),
**caractérisé en ce que** la première face (120a ; 220a) de la pièce de structure (120 ; 220) en regard de la face interne (101 ; 201) du carter comporte des rainures (130 ; 230) débouchant directement ou indirectement dans le volume interne du carter et **en ce que** lesdites rainures (130 ; 230) s'étendent au moins dans la direction axiale du carter (100).

2. Carter selon la revendication 1, **caractérisé en ce que** les rainures (230) débouchent au moins à une extrémité axiale de la pièce de structure (220).

3. Carter selon la revendication 1 ou 2, **caractérisé en ce que** les rainures (130) s'arrêtent avant les extrémités axiales de la pièce de structure (120), les rainures comportant des perforations (140) débouchant sur la deuxième face (120b) de la pièce de structure.

4. Carter selon l'une quelconque des revendications 1 à 3,
**caractérisé en ce que** des premières rainures (130) s'étendent dans la direction axiale du carter (100) et **en ce que** des deuxièmes rainures (150) s'étendent perpendiculairement aux premières rainures (130).

5. Carter selon l'une quelconque des revendications 1 à 4,
**caractérisé en ce que** la face interne du carter comporte des rainures débouchant au-delà de la pièce de structure.

6. Carter selon l'une quelconque des revendications 1 à 4,
**caractérisé en ce que** la pièce de structure (120 ; 220 ; 320 ; 420) comprend une structure alvéolaire (121 ; 221 ; 321 ; 421) en regard de la face interne (101 ; 201 ; 301 ; 401) du carter (100 ; 200 ; 300 ; 400).

7. Carter selon la revendication 6, **caractérisé en ce que** les rainures comportent des gouttières (131 ; 151 ; 231).

8. Carter selon la revendication 6 ou 7, **caractérisé en ce que** la pièce de structure (120 ; 220 ; 320 ; 420) comprend en outre une couche de revêtement abradable (123 ; 223 ; 323 ; 423).

9. Moteur aéronautique à turbine à gaz ayant un carter de rétention de soufflante selon l'une quelconque des revendications 1 à 8.

10. Aéronef comprenant un ou plusieurs moteurs selon la revendication 9.

## Patentansprüche

1. Gehäuse (100; 200; 300; 400) einer Gasturbine aus Verbundwerkstoff mit organischer Matrix, umfassend eine durch eine organische Matrix verdichtete Verstärkung, wobei das Gehäuse einen Innenraum begrenzt und auf seiner Innenseite (101; 201; 301; 401) ein Strukturteil (120; 220; 320; 420) umfasst, das eine erste Seite (120a; 220a; 320a; 420a) gegenüber der Innenseite des Gehäuses und eine gegenüberliegende zweite Seite (120b; 220b; 320b; 420b), welche einen Strömungskanalteil (102; 202; 302; 402) definiert, aufweist,
**dadurch gekennzeichnet, dass** die erste Seite (120a; 220a) des Strukturteils (120; 220) gegenüber der Innenseite (101; 201) des Gehäuses Nuten (130; 230) umfasst, die direkt oder indirekt in den Innenraum des Gehäuses münden, und dass sich die Nuten (130; 230) wenigstens in der axialen Richtung des Gehäuses (100) erstrecken.

2. Gehäuse nach Anspruch 1, **dadurch gekennzeichnet, dass** die Nuten (230) wenigstens an einem axialen Ende des Strukturteils (220) ausmünden.

3. Gehäuse nach Anspruch 1 oder 2, **dadurch gekennzeichnet, dass** die Nuten (130) vor den axialen Enden des Strukturteils (120) aufhören, wobei die Nuten Löcher (140), welche auf der zweiten Seite (120b) des Strukturteils ausmünden, umfassen.

4. Gehäuse nach einem der Ansprüche 1 bis 3, **dadurch gekennzeichnet, dass** sich erste Nuten (130) in der axialen Richtung des Gehäuses (100) erstrecken und dass sich zweite Nuten (150) zu den ersten Nuten (130) senkrecht erstrecken.

5. Gehäuse nach einem der Ansprüche 1 bis 4, **dadurch gekennzeichnet, dass** die Innenseite des Gehäuses Nuten umfasst, die jenseits des Strukturteils ausmünden.

6. Gehäuse nach einem der Ansprüche 1 bis 4, **dadurch gekennzeichnet, dass** das Strukturteil (120; 220; 320; 420) eine Wabenstruktur (121; 221; 321; 421) gegenüber der Innenseite (101; 201; 301; 401) des Gehäuses (100; 200; 300; 400) umfasst.

7. Gehäuse nach Anspruch 6, **dadurch gekennzeichnet, dass** die Nuten Rinnen (131; 151; 231) umfassen.

8. Gehäuse nach Anspruch 6 oder 7, **dadurch gekennzeichnet, dass** das Strukturteil (120; 220; 320; 420) ferner eine Abriebüberzugsschicht (123; 223; 323; 423) umfasst.

9. Gasturbinenflugtriebwerk, das ein Gehäuse zum Festhalten eines Gebläses nach einem der Ansprüche 1 bis 8 aufweist.

10. Luftfahrzeug, das ein oder mehrere Triebwerke nach Anspruch 9 umfasst.

## Claims

1. A gas turbine casing (100; 200; 300; 400) made of organic matrix composite material comprising reinforcement densified by an organic matrix, said casing defining an inside volume having on its inside face (101; 201; 301; 401) a structural part (120; 220; 320; 420) having a first face (120a; 220a; 320a; 420a) facing the inside face of the casing and an opposite second face (120b; 220b; 320b; 420b) defining a portion of the flow passage (102; 202; 302; 402), the casing being **characterized in that** the first face (120a; 220a) of the structural part (120; 220) facing the inside face (101; 201) of the casing includes grooves (130; 230) opening out directly or indirectly into the inside volume of the casing, and **in that** said grooves (130; 230) extend at least in the axial direction of the casing (100).

2. A casing according to claim 1, **characterized in that** the grooves (230) open out at least at one axial end of the structural part (220).

3. A casing according to claim 1 or claim 2, **characterized in that** the grooves (130) stop before the axial ends of the structural part (120), the grooves including perforations (140) opening out in the second face (120b) of the structural part.

4. A casing according to any one of claims 1 to 3, **characterized in that** first grooves (130) extend in the axial direction of the casing (100), and **in that** second grooves (150) extend perpendicularly to the first grooves (130).

5. A casing according to any one of claims 1 to 4, **characterized in that** the inside face of the casing includes grooves that open out beyond the structural part.

6. A casing according to any one of claims 1 to 4, **characterized in that** the structural part (120; 220; 320; 420) comprises a cellular structure (121; 221; 321; 421) facing the inside face (101; 201; 301; 401) of the casing (100; 200; 300; 400) .

7. A casing according to claim 6, **characterized in that** the grooves comprise gutters (131; 151; 231).

8. A casing according to claim 6 or claim 7, **characterized in that** the structural part (120; 220; 320; 420) further includes an abradable coating layer (123; 223; 323; 423).

9. A gas turbine aeroengine having a fan retention casing according to any one of claims 1 to 8.

10. An aircraft including one or more engines according to claim 9.
